# EUROPEAN PATENT APPLICATION

(11) **EP 1 215 609 A2**
(43) Date of publication of application: **19.06.2002**
(21) Application number: 01310206.6
(22) Date of filing: 06.12.2001
(51) Int. Cl.: G06F 17/60

(54) **Method and apparatus to maximize advertising revenue**

(30) Priority: 15.12.2000 US 738199
(71) Applicant: Hewlett-Packard Company, Palo Alto, CA 94304 (US)
(72) Inventor: Castle, Daniel C., Monmouth, OR 97361 (US); Currans, Kevin G., Philomath, OR 97370 (US)
(74) Representative: Jackson, Richard Eric

(57) **Abstract**

Advertising revenue generated from placing ads in a publication with limited available advertising space is automatically maximized at at least market rates by selecting the highest-paying ads for publication. Beginning with the highest-paying ads, available ad space in an on-line publication is filled with advertisements (102, 104, 106, 108) that will fit within ad space that is available in the publication. In the preferred embodiment, ads (102, 104, 106, 108) are matched (116) to subscribers (recipients) of the publication according to subscriber demographic data (114).

## Description

### FIELD OF THE INVENTION

This invention relates to publishing. In particular, this invention relates to a method and apparatus by which limited advertising space in an electronically distributed publication can be automatically auctioned to the highest bidder, as well as matched to preferred subscribers according to demographic data.

### BACKGROUND OF THE INVENTION

The world wide web of the Internet has spawned a number of new, on-line businesses. It has also provided an additional, world-wide, always-open sales outlet to established businesses, i.e. pre-Internet businesses, who otherwise relied upon bricks and mortar establishments from which they conducted business. Indeed, most businesses now have, or use, web sites to sell goods and services.

Newspapers and periodicals have not been left behind in the on-line revolution. Many daily newspapers like the Chicago Tribune® and the Wall Street Journal® are now available "on line" through the web and it is expected that the reduced distribution costs of on-line publishing will be more widely embraced by other publishers as time goes on.

Regardless of how widespread the Internet becomes, at least one aspect of the pre-Internet publishing business will likely remain in the Internet publishing age: revenue will be derived from advertising. For a variety of reasons, most on-line publications have only a limited amount of advertising space from which they can generate revenue, i.e. sell. Maximizing advertising revenue by assuring that "market" rates are changed for the advertising might make the difference between success and failure of an on-line publication. At the same time, advertisers who are asked to pay relatively premium prices for on-line advertising space might be reluctant to do so without some sort of assurance that the advertising will reach its intended (or preferred) audience.

A method (and apparatus) by which on-line advertising space can be assuredly (and automatically) sold at at least "market" rates would be an improved method of generating revenue in on-line publishing. In addition, providing an assurance to an on-line advertiser that advertising will only be placed (and an advertising expense therefore incurred) if an ad will be delivered to an intended audience might encourage on-line advertisers to pay higher prices for on-line advertising.

### SUMMARY OF THE INVENTION

There is provided a method and apparatus for automatically auctioning advertising space at market rates to prospective advertisers in an on-line publication, which might or might not be printed. The method includes the steps of obtaining from at least one potential advertiser, an offer (typically an amount of money) to place an advertisement (i.e. publish) in the publication. The amount of the first offer (to place an advertisement in the publication) is compared to other offers received from other advertisers. The advertisement of the advertiser offering the highest price is placed in the publication.

### BRIEF DESCRIPTION OF THE DRAWINGS

Figure 1 is a simplified flow chart depicting the steps of the preferred method.
Figure 2 is a simplified depiction of an apparatus for performing the steps of the preferred method.

### DETAILED DESCRIPTION OF THE PREFERRED EMBODIMENT

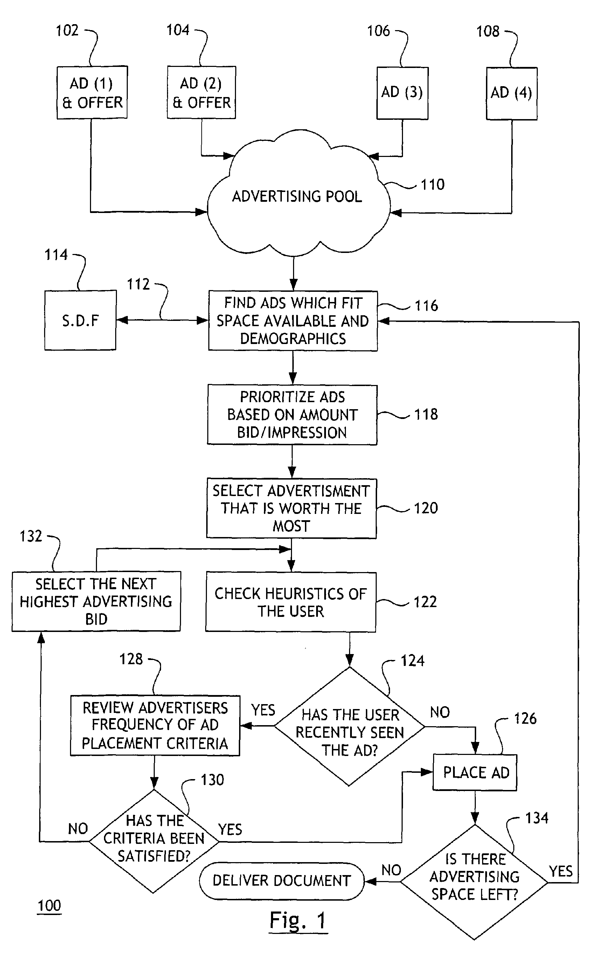

Figure 1 shows the steps of the preferred method 100 of maximizing revenue in an on-line publication, which might or might not be printed. Examples of such publications might include electronic or on-line versions of newspapers, periodicals, as well as services such as the Hewlett-Packard Instant Delivery™ service, (HPID) which is provided by the Hewlett-Packard Company.

By way of example, HPID uses the web to selectively obtain and deliver informational content to recipients, who subscribe to the HPID service (subscribers), to whom data files, which comprise the publication, are delivered via an electronic file transfer. Some newspapers, like the Chicago Tribune™, provide electronic copies of its printed newspaper, on-line, and available to anyone with Internet access and a web browser program. On-line publication services, might scour other on-line publications (e.g., on-line versions of newspapers) for information (e.g. news stories) of interest to a particular subscriber, by subject matter for instance, and, with appropriate permissive agreements of copyright holders, collect from the other publications, only stories of interest to each subscriber by downloading the content files via the Internet. The collection of files from the various sources, which relate only to subject matter of interest to the subscriber, can then be sent to the subscriber via the Internet for consumption.

As mentioned above, as is true with printed newspapers, on-line publications generate operating revenue from advertising. A problem with advertising in an on-line publication however is that the data files containing the advertising material require transmission over a data network, thereby consuming limited file transmission bandwidth and increasing the time it takes to send a publication to a recipient. In order to keep transmission times reasonable, advertising space in an on-line publication is more limited than in a printed publication, such as off-set printed newspapers or magazines. Because advertising space in an on-line publication is limited, maximizing the revenue it generates is important.

With respect to Figure 1, electronic copies or versions of advertisements 102, 104, 106 and 108 to be placed in an on-line publication (not shown in Figure 1) are provided or made available to the publisher (not shown) for placement in the publication. Advertisements 102, 104, 106 and 108 are placed in a pool 110 (typically embodied as buffer storage device, e.g. RAM or disk storage, not shown in Figure 1 ― and equivalents thereof) for later retrieval. Any advertisement in an advertisement (ad) pool is a candidate for publication, albeit subject to the selection thereof by the putative publisher of the on-line publication. (Publishers might refuse to publish certain advertising considered inappropriate for the publication and/or its subscribers for a variety of reasons and might therefore refuse to publish submitted advertising material.) At least one factor for determining which ads to place in a publication is the compensation or price, which an advertiser is, or might be willing to pay for placement. The price that an advertiser is willing to pay to place an ad might be affected by a number of factors (e.g. an advertisement's location in the publication or the published size) or determined in a number of ways, all terms and conditions of which are considered hereinafter to be "offers" to the publisher of the on-line publication to place an ad. Advertisers can send the offered price, i.e. the offer, with, and as part of, the actual advertisements 102, 104, 106 and 108 submitted to the putative publisher for publication. The price and/or or other terms might be submitted by fax, e-mail, or other delivery mechanism, in either electronic or printed format, either before, contemporaneously with, or after the advertisements and also identified in Figure 1 by reference numerals 102, 104, 106 and 108.

In its simplest embodiment, the method simply comprises placing the highest-paying ads in the publication, if they will "fit" (as determined by the publisher according to either the size of a data file that constitutes the advertisement, which will affect publication's transmission time, or, the physical size of an advertisement as it will appear in the publication) in the descending order corresponding to the offer price(s) to place the ad or ads. In one embodiment, the price at which the advertisement of the highest offer is sold or charged, is the offered price of the next-highest offer so as to incentivize the advertisers to bid higher than their competitors might bid. Bids or offers to place ads are preferably for determinable sums, i.e. money, but could also be in the form of barter or exchanges. Other embodiments would include simply sorting the offers by amount and taking the literally highest offer.

In the preferred embodiment, the publisher of an on-line publication can provide some assurance to prospective advertisers that their ads will be delivered to preferred recipients by matching advertiser's advertisements to particular subscribers (not shown) by using subscriber demographic data, which can also be provided to the prospective advertisers by the publisher. By doing so, increased advertising rates over other media can be justified. Sharing subscriber data to prospective advertisers can also be used to demonstrate circulation or pre-identify subscribers to whom content and advertising should be delivered. Providing some assurance that the ads will be targeted to particular subscribers can be used to justify increased advertising rates.

The preferred method of the invention includes the step 112 of reading subscriber (user) demographic data, for each subscriber to a service such as HPID, from a subscriber demographics file (SDF) 114. Data in the SDF 114 might include keywords (possibly obtained voluntarily by the subscriber or obtained from services and sources) from which a subscriber's buying practices and preferences can be determined or inferred. Without limitation, SDF data might also include the names, categories or descriptions of topics of interest to the subscriber, or names, categories or descriptions of other books, magazines or other publications preferred or received by the subscriber in the past. Information in the SDF 114 might also include numeric data or other indicia of a subscriber's background, income, profession or trade, interests or other characteristics. Keywords and other data might also identify subject matter of interest to the subscriber and be used to identify news stories or articles of interest to be collected and sent to the subscriber. Demographic data can be regularly updated in step 112 from data obtained from a variety of sources including market research firms, and even the subscribers.

In step 116, in the process of reading keywords 112 and other data in the SDF 114, advertisements in the pool of ads can be matched or fitted to conform to each subscriber to whom the electronic publication is to be delivered. In a service like HPID, which can customize both the content and advertising delivered to each subscriber, the amount of space that might be available for content and advertising will likely vary dynamically as articles and ads are selected. In step 116, advertisements in the ad pool, which comport with subscriber demographic data in the SDF, and content that also matches the demographic data determine the amount of space available for advertising. As a first step in selecting ads, those ads in the pool 102, 104, 106 and 108, which will fit within available space, are selected, identified or marked as candidates for publication in step 116 because they will fit within available advertising space. Alternatively, an advertiser might specify the size of a placed ad or, where the ad appears in the publication.

After the candidate ads are identified in step 116, in step 118, the advertiser's offered price to place each of the candidate advertisements are compared and sorted or prioritized by the amounts offered by the various prospective advertisers. In step 120, the candidate advertisement that was offered by its advertiser at the highest or maximum amount or price offered by the advertiser, is selected for placement into the publication. The actual location of the ad's placement in the publication ― and therefore the value to a prospective advertiser - will vary according to a variety of factors, including, but not limited to the content information (files) that will comprise the rest of the publication at delivery time. Advertising placement offers might also therefore include terms that specify an amount based upon placement location in the publication. Similarly, an advertiser might require certain minimum amounts for ads placed in certain areas or locations of the publication. Advertising offers ― including both monetary and non-monetary terms, both of which are considered herein and for claim construction to be offer "amounts" and/or offer "prices" ― are evaluated at step 120.

In the course of auctioning ads as disclosed herein, the physical size of both the content files and the advertising files can affect the ability to place an advertisement ― and generate revenue. If the sizes of advertising copy and the size of content could be adjusted, more advertisements might be placed in a publication thereby increasing ad revenues even further. A method to size advertising and content information for publication is disclosed and claimed in the co-pending patent application assigned to Hewlett-Packard Company that is entitled: "DOCUMENT DELIVERY SYSTEM WITH AUTOMATICALLY ADJUSTED COPY INSERTS" by Kevin Currans, et al. (HP disclosure number 10001688). This application was filed on 17 August 2000 as U.S. patent application 09/641,617.

By using the method for sizing copy and advertising inserts disclosed in "DOCUMENT DELIVERY SYSTEM WITH AUTOMATICALLY ADJUSTED COPY INSERTS", the teachings of which are incorporated by reference, the content information files and candidate advertising might be suitably resized in auctioning ads as described herein to further maximize advertising revenue. The sizing of ads and content can, for example, be part of either step 126 or step 116 et seq. as a re-sized ad might be of greater or lesser value to both the advertiser and publisher. Re-sizing ads and content might done at any conveniently located step.

In step 122, recipient (subscriber) heuristic data is read (checked) to determine if any of the candidate advertisements, 102 for example, have already been sent to the subscriber, in part, to determine if another delivery of the same, related or similar advertising is appropriate ― according to either advertiser demands, expectations or payment or the subscriber's demographic data.

In step 124, if the subscriber to whom the publication is to be delivered has not seen the candidate ad or ads, the ad is placed in the publication in step 126 using any appropriate file manipulation. The file representing ad 102 for example, might be "pasted" into the content information files so that the ad appears at some predetermined location in the printed or displayed version of the publication delivered to a subscriber.

If it is determined in step 124 that advertisements have been seen by a subscriber, a review of advertiser's ad placement criteria is made in step 126. If it is determined in step 130 that the advertiser's ad placement criteria has not been established, i.e. the advertiser paid for several ad deliveries, the ad is placed for publication in step 126. If the advertiser did not pay for the ad delivery, or prior deliveries satisfied the publisher's commitment to deliver multiple ads, the method rejects the selected ad and instead re-selects the next-highest paying ad for publication consideration in step 132. Program control returns to step 122 as shown.

After the method places a candidate advertisement for actual publication in step 126, the method step 134 re-considers whether any other advertising space is left to be filled. If advertising space remains to be filled, program control returns to step 116 whereat advertisements remaining in the pool are subjected to the steps thereafter. In such a case, the next-highest advertising offer is identified and used to identify the ad to be placed in the remaining space. If all ads have been placed, the document (which includes content information) can be delivered or otherwise made available to the subscriber for whom the advertisements were assembled using the foregoing methodology.

In the preferred embodiment, the Hewlett-Packard Instant Delivery™ HPID service collects information content from a variety of sources. From an advertisers perspective, the demographic data in the SDF preferably provides an indicia that the advertising material to be placed for delivery to a particular subscriber might produce a beneficial effect for the advertiser, i.e. reach an existing customer or reach a potential new customer for the advertiser's goods or services, thereby justifying an enhanced cost to place the advertising in the electronic publication.

It will be apparent to those skilled in the art that the distribution of an on-line publication, the advertising material of which was auctioned off using the disclosed methodology, might be performed by third parties, for example, an Internet service provider ("ISP") or a bulletin board service. In such an embodiment, a document or publication to be distributed to various individuals or entities (with the advertising selected and placed and sized as disclosed herein) can be downloaded from a web site or bulletin board of the ISP. An ISP distributing an on-line might also maintain a database of individuals, entities or simply e-mail addresses to which a file or files comprising an on-line publication are to be sent, either before or after the publication originator determines which advertising material to include.

Once certain keywords in a profile are matched or identified by an advertiser or publisher, advertisers who might want to target advertising to such a user can have their advertising placed in the publication using the procedure described above, i.e. auctioned on the basis of offering price of the advertiser. In this way advertising is sold at at least a "market" rate and with the anticipation that it will be well-received upon delivery.

In the preferred embodiment, the publication is delivered via a data network such as the world wide web. The publication can be delivered via the web through, or using a third-party Internet service provider (ISP) such as America OnLine™ or other portal or gateway. In such a scenario, "auctioned" advertisements are placed in a publication using the disclosed methodology by the putative publisher, which might also size ads for placement as well. After the document (i.e. the publication) is ready for distribution, it can be electronically transmitted to a third-party Internet service provider for actual publication and/or distribution. For purposes of claim construction, a third party Internet service provider also acts as a nominal "publisher" of the "publication."

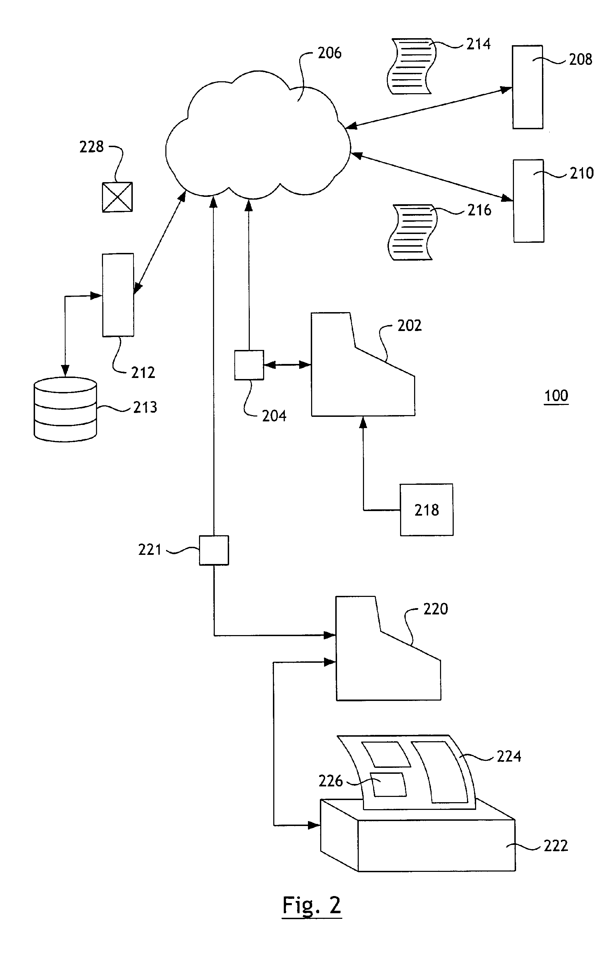

Figure 2 is a simplified depiction of an apparatus by which the method might be performed. A data network 206, such as the world wide web of the Internet, links the computers, web page servers or other functional processors 208, 210 and 212 of several advertisers to the computer or web server or other processor 202 of a publisher of an on-line publication, such as an on-line edition of a newspaper or the HPID. (As set forth above, the web page servers 208, 210 and 212 might be owned, operated and/or controlled by an Internet service provider, which simply provides distribution capacity for the real publisher of an on-line publication. In such an alternate embodiment, the ISP performs the role of the putative publisher by distributing or making available, a document with included advertising. For purposes of claim construction, a "distributor" or "publisher" of an on-line publication should therefore be construed to include an Internet service provider as well.) The on-line publication is delivered to subscribers (the computer of one such subscriber shown and identified by reference numeral 220) for display on a computer or print out onto a page 224 at the subscriber's local printer 222.

At least first, second and third advertisements 214, 216, 218 for placement in an on-line publication 224 are preferably delivered to a first computer that corresponds to the publisher's computer 202 from the computers of prospective advertisers 208, 210, 212 via an electronic file transfer, such as a file attached to an e-mail message sent and received via the Internet 206. In addition to delivering the advertisements via an electronic file transfer such as e-mail, the advertisers can also deliver to the publisher, the price or prices or terms (monetary as well as non-monetary) at which or on which they are willing to pay to place an ad (offer), as well as the number of times to publish it, and characteristics of preferred recipients to whom the ad or ads should be sent. Such information and requests can also be delivered to the publisher via telephone, delivery service or other appropriate means. (As used herein and in the claims, a "computer" might be a single-user personal computer but for purposes of claim construction would include networked PCs, workstations and/or main frame processors.) Alternate delivery mechanisms would include of course physical delivery of an advertisement copy, such as by the U.S. postal service. Ads that are physically delivered (on paper or other media) for placement, would have to be converted into an electronic format, typically by optically scanning the ad to a suitable file format.

When the electronic files representing advertisements 228 are received at the publishers computer 202 they are typically stored on a storage device 218 that would include random access memory, tape or magnetic disk storage devices. With respect to the method described above, ads that have been pooled might be stored for placement for extended periods of time, which is readily accomplished using any appropriate disk storage media 218.

Before or after advertisements are fully collected, access to a subscriber data file is accomplished by accessing a storage device such as RAM or disk storage 218 where such subscriber profile data (demographic data) is kept, and which comprises a computer readable medium containing instructions to carry out the foregoing method. Thereafter, the method steps described above are accomplished via the software programmed into the publisher's computer 202. After the ads for which there is space available have been placed, the assembled publication can be sent via the Internet 206 through an appropriate interface (dial up modem, Ethernet or other mechanism) 204 to the Internet 206 for delivery to the subscriber's computer 220, which of course is also capable of being coupled to the Internet 206 through an appropriate transmission media 221 (and interface).

By using the foregoing method and apparatus, on-line publications which generally have only limited advertising space, can help maximize the revenue that such advertising space can generate. When asking advertisers to pay premium prices for space in an on-line publication, the publisher can represent to the prospective advertisers that placed ads are targeted to selected subscribers, which the advertisers can select according to generic descriptors in the subscribers data files.

## Claims

1. A method of placing advertising in an on-line publication comprising the steps of:
obtaining a first offer to place a first advertisement in said on-line publication (102);
obtaining a second offer to place a second advertisement in said on-line publication (104);
selecting for publication, from said first offer and said second offer, the offer of the greatest amount (120);
identifying at least one subscriber to which said on-line publication, with said advertisement corresponding to the greatest offer, is to be sent according to demographic data for said subscriber (122);
placing in said on-line publication, the advertisement corresponding to the greatest offer (126).

2. The method of claim 1 further including the steps of:
determining whether an advertisement selected for publication has been previously placed (124);
placing said advertisement selected publication again, if an advertiser's ad placement criteria has not been satisfied (130, 126).

3. The method of claim 1 further including the step of reading subscriber demographic data to identify subscribers to whom said on-line publication is to be delivered (112).

4. A method of placing advertising from a plurality of advertisers in a publication to be delivered to predetermined subscribers of said publication, said method comprising:
identifying, for at least one predetermined subscriber to said publication, first and second advertisements from first and second prospective advertisers (102, 104) that comports with subscriber profile information stored in at least one data file (116);
obtaining a first offering price to place said first advertisement in said publication (102);
obtaining a second offering price to place said second advertisement in said publication (104);
placing in said publication, at least one of said first and second advertisements, for the corresponding prospective advertiser that offers the greater price of said first and second prices (120, 126).

5. The method of claim 4 comprised of the step of: updating said subscriber profile information prior to identifying advertising that comports with said subscriber profile information (112).

6. The method of claim 4 further including the steps of: determining content information to be compiled and delivered to a subscriber based upon subscriber profile information (116).

7. The method of claim 4 further including the step of sizing at least one of either content or advertising matter to fit within an available publication space (126).

8. A method of placing advertising from a plurality of advertisers in a publication to be delivered to a plurality of predetermined subscribers of said publication, said method comprising:
providing to at least one prospective advertiser (112), demographic data for at least one subscriber to said publication;
obtaining from said at least one advertiser, a first advertisement for placement in said publication (102), and which is selected at least in part using said demographic data for said at least one subscriber (116);
obtaining a first offering price (102) to place said first advertisement in said publication;
obtaining a second offering price (104) to place a second advertisement in said publication;
placing in said publication (126), at least one of said first and second advertisements, for the advertiser offering the greater price of said first and second prices.

9. The method of claim 8 wherein said demographic data determines at least in part, the content of said publication on a subscriber-by-subscriber basis.

10. An apparatus to determine which advertising from a plurality of advertisers is to be placed in an on-line publication having limited advertising space to be delivered to predetermined subscribers to said publication, said apparatus comprising:
first computer identifying, advertisements that comport with subscriber profile information for at least one predetermined subscribers to said publication (202);
a data storage device coupled to said first computer wherein subscriber profile information is stored (218);
an interface coupling said data network to said first computer, enabling the exchange of data between advertisers and said first computer and between subscribers to said publication and said first computer (204).
